# EUROPEAN PATENT SPECIFICATION

(11) **EP 4 371 952 B1**
(45) Date of publication and mention of the grant of the patent: **25.11.2026**
(21) Application number: 22842081.6
(22) Date of filing: 11.07.2022
(51) Int. Cl.: C03B 37/027, C03C 13/04, G02B 6/02, C03B 37/025

(54) **METHOD FOR PRODUCING OPTICAL FIBER, AND OPTICAL FIBER**
VERFAHREN ZUR HERSTELLUNG EINER OPTISCHEN FASER UND OPTISCHE FASER
PROCÉDÉ DE PRODUCTION D'UNE FIBRE OPTIQUE, ET FIBRE OPTIQUE

(30) Priority: 13.07.2021 JP 2021115656
(43) Date of publication of application: 22.05.2024
(73) Proprietor: SUMITOMO ELECTRIC INDUSTRIES, LTD., Osaka-shi, Osaka 541-0041 (JP)
(72) Inventor: ISHIKAWA, Shinji, Osaka-shi, Osaka 541-0041 (JP); ENOMOTO, Tadashi, Osaka-shi, Osaka 541-0041 (JP); SAITO, Takahiro, Osaka-shi, Osaka 541-0041 (JP); HASEGAWA, Takemi, Osaka-shi, Osaka 541-0041 (JP)
(74) Representative: TBK
(86) International application number: PCT/JP2022/027267
(87) International publication number: WO 2023/286737

(56) References cited:
- WO-A1-2013/073354
- WO-A1-2013/140688
- CN-A- 111 443 424
- JP-A- 2005 343 703
- JP-A- 2007 297 254
- JP-A- 2007 297 254
- JP-A- 2011 514 877
- US-A1- 2002 044 753
- US-A1- 2014 056 596
- US-A1- 2018 251 397

## Description

### Technical Field

The present disclosure relates to a method for producing an optical fiber and an optical fiber. The present application claims the priority based on Japanese Patent Application No. 2021-115656 filed on July 13, 2021.

### Background Art

Patent Literature 1 discloses a method for producing an optical fiber for reducing the transmission loss of an optical fiber. In this method for producing an optical fiber, a fluid serving as a pressurizing medium (for example, inert gas) is delivered into a pressure vessel to increase pressure, and the optical fiber is drawn in the high-pressure pressure vessel. In the production method using this pressurizing medium, the relaxation of the glass network structure in the optical fiber preform is advanced to reduce the Rayleigh scattering loss that affects the transmission loss of the optical fiber. Patent Literature 2 discloses a method for producing an optical fiber that reduces the transmission loss of the optical fiber by drawing the optical fiber after pressurizing an optical fiber preform at a high temperature. Patent Literature 3 discloses a treatment method for reducing a Rayleigh scattering coefficient by reducing voids in a glass structure. Patent Literature 4 discloses an optical fiber having a core and a plurality of clad layers, wherein the maximum residual compressive stress of the core is made to be 85 to 165 MPa. Patent Literature 5 discloses an optical fiber, in which, when residual stress in the core is compressive stress that has an absolute value greater than or equal to 5MPa, excess loss can be less than or equal to 0.02 dB/km. Patent Literature 6 discloses an optical fiber, in which, when drawing the optical fiber preform upon heating, draws the optical fiber preform at a tension within the range of 0.05 to 0.20 N. Patent Literature 7 discloses an optical fiber, which is obtained by doping the core region of a fiber preform according to a dopant scheme that includes one or more viscosity-reducing dopants.

### Citation List

### Patent Literature

Patent Literature 1: JP2020169113A
Patent Literature 2: JP2020158349A
Patent Literature 3: WO 2015022966A1
Patent Literature 4: JP2007297254A
Patent Literature 5: US2014056596A1
Patent Literature 6: US2002044753A1
Patent Literature 7: US2018251397A1

### Summary of Invention

The present disclosure provides a method for producing an optical fiber. This method for producing an optical fiber includes heating and melting an optical fiber preform and drawing the optical fiber preform. In this method for producing an optical fiber, the optical fiber is formed to include a core, a surrounding cladding surrounding a periphery of the core, and an outer cladding surrounding the surrounding cladding. In the drawn optical fiber, a maximum compressive stress of at least 100 MPa or more is applied to an optical waveguide region including the core and the surrounding cladding. A first viscosity being a viscosity at 1500°C of a material constituting the optical waveguide region is lower than a second viscosity being a viscosity at 1500°C of a material constituting the outer cladding.

The present disclosure provides an optical fiber. This optical fiber is an optical fiber formed to include a core, a surrounding cladding surrounding a periphery of the core, and an outer cladding surrounding the surrounding cladding. In this optical fiber, a maximum compressive stress of an optical waveguide region including the core and the surrounding cladding is 100 MPa or more. A first viscosity being a viscosity at 1500°C of a material constituting the optical waveguide region is lower than a second viscosity being a viscosity at 1500°C of a material constituting the outer cladding.

### Brief Description of Drawings

[FIG.1] FIG.1 is a diagram illustrating a configuration of a drawing apparatus used in a method for producing an optical fiber according to an embodiment.
[FIG.2] FIG.2 is a cross-sectional view illustrating an example of a cross-sectional shape of an optical fiber preform.
[FIG.3] FIG.3 is a cross-sectional view illustrating an example of a cross-sectional shape of an optical fiber, and also shows refractive index distribution, power distribution, and stress distribution in the optical fiber.
[FIG.4] FIG. 4 is a view showing refractive index distribution, power distribution, and power distribution × radius in the optical fiber, and is a view for describing an optical waveguide region.

### Description of Embodiments

### [Problems to be Solved by the Present Disclosure]

When the method and apparatus for producing an optical fiber described in Patent Literature 1 are applied to mass production, it is necessary to cover the entire drawing apparatus of the optical fiber with a pressurized vessel. In this case, it is necessary to perform drawing at a high speed while maintaining the high pressurized state by minimizing leakage from the pressurizing medium and the like. For this reason, according to the production method and the production apparatus of Patent Literature 1, the apparatus becomes large or complicated. Since there is a possibility of an increase in size and the like, when the method for producing an optical fiber described in Patent Literature 1 is applied to mass production, a practically possible pressure range is assumed to be, for example, about 0.15 MPa to 0.2 MPa. It is difficult to sufficiently reduce the transmission loss of the optical fiber by sufficiently promoting the relaxation of the glass network structure in the optical fiber preform when the pressurization is performed to such an extent. In the method for producing an optical fiber described in Patent Literature 2, equipment for holding an optical fiber preform at a high temperature and a high pressure is required. In the method of pressurizing the optical fiber preform itself at a high temperature, the compressed glass body is thermally relaxed by being heated and melted in the next drawing process, and thus, the glass body returns to the glass in a normal pressure state. Therefore, when the optical fiber is formed, there is a high possibility that the effect of reducing the scattering loss disappears.

### [Effects of Present Disclosure]

According to the present disclosure, the transmission loss of an optical fiber can be reduced without depending on a configuration of a production apparatus.

### [Description of Embodiments of Present Disclosure]

First, contents of embodiments of the present disclosure will be listed and described. A method for producing an optical fiber according to an embodiment includes heating and melting an optical fiber preform and drawing the optical fiber preform. In this method for producing an optical fiber, the optical fiber is formed to include a core, a surrounding cladding surrounding a periphery of the core, and an outer cladding surrounding the surrounding cladding. In the drawn optical fiber, a maximum compressive stress of at least 100 MPa or more is applied to an optical waveguide region including at least the core.

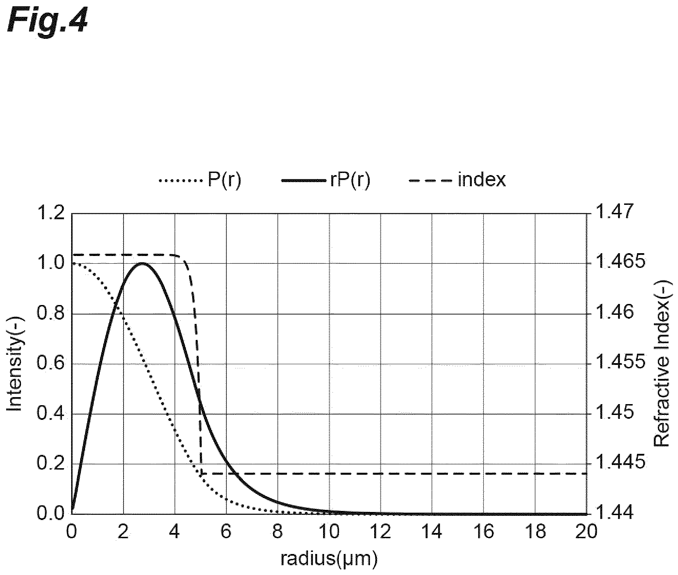

In the method for producing an optical fiber, in the drawn optical fiber, a maximum compressive stress of at least 100 MPa or more is applied to an optical waveguide region including at least the core. When an optical fiber preform is drawn to form an optical fiber, strain caused by a difference in thermal expansion coefficient (also referred to as a coefficient of thermal expansion) or a difference in viscosity in a radial direction of a material such as glass composition remains in the drawn optical fiber. In this production method, a large compressive stress is generated in the optical waveguide region by controlling this strain. In this case, a void component that causes scattering in a material (for example, glass) of the optical waveguide region through which light propagates is compressed by the compressive stress generated in the optical waveguide region, and thus the glass density of the optical waveguide region of the optical fiber is improved. As a result, transmission loss due to scattering can be reduced. In this production method, the above-described compressive stress is generated in the optical fiber preform used for drawing or the optical fiber to be drawn. In this case, since it is not necessary to provide a pressurized vessel or the like on the drawing apparatus of the optical fiber, the above-described optical fiber having a low transmission loss can be produced without depending on the configuration of the apparatus for producing an optical fiber. As described above, according to this production method, the transmission loss of an optical fiber can be reduced without depending on a configuration of a production apparatus. The production method according to this embodiment may be performed by the production apparatus provided with a pressurized vessel or the like as long as the configuration is simple. Note that, the optical waveguide region refers to a region that transmits light in the optical fiber, and includes a core and a part of a cladding surrounding the core (surrounding cladding). The optical waveguide region is a region up to a radius in which r×P(r) is less than 1/100 with respect to the peak value of r×P(r) when the power distribution in the radial (r) direction of the base mode of the transmitted light is P(r). The optical waveguide region may be a region up to a radius in which r×P(r) is less than 1/10000 with respect to the peak value of r×P(r) when the power distribution in the radial (r) direction of the base mode of the transmitted light is P(r). Specifically, as illustrated in FIG.4, in the case of the power distribution P(r) and the refractive index distribution in the radial direction, a region where r×P(r) is 1/100 is approximately twice the core radius, and the region where r×P(r) is 1/10000 is approximately three times the core radius.

As an embodiment, in the above-described method for producing an optical fiber, a first viscosity being a viscosity at 1500°C of a material constituting the optical waveguide region may be lower than a second viscosity being a viscosity at 1500°C of a material constituting the outer cladding. As described above, by lowering the stickiness of the optical waveguide region with respect to the stickiness of the outer cladding which is a non-waveguide region, a tensile force applied to the optical fiber at the time of drawing is concentrated on the outer cladding having high stickiness, and then this state is released after drawing, so that the compressive strain remains in the optical waveguide region that does not hold tensile force as much as the tensile strain on the outer side is released. That is, according to this production method, the above-described compressive stress can be more reliably generated in the optical fiber to be produced by using the difference in viscosity between the optical waveguide region and the outer cladding. As described above, according to this production method, the transmission loss of an optical fiber can be more reliably reduced without depending on a configuration of a production apparatus. Note that, in this embodiment, the first viscosity may be lower than one-fifth (1/5) of the second viscosity. By significantly reducing the stickiness of the optical waveguide region in this manner, it is possible to generate a larger compressive strain in the optical waveguide region and to further reduce the transmission loss of the optical fiber.

As an embodiment, in the method for producing an optical fiber according to any one of the above-described embodiments, a first thermal expansion coefficient being a thermal expansion coefficient of the material constituting the outer cladding may be larger than a second thermal expansion coefficient being a thermal expansion coefficient of the material constituting the optical waveguide region. In this case, since the first thermal expansion coefficient of the material of the outer cladding located outside the optical waveguide region is larger than the second thermal expansion coefficient of the material of the optical waveguide region, when the optical fiber preform is heated, melted, drawn, and then vitrified, the outer cladding contracts in a direction of further reducing the volume, so that the compressive stress is generated with respect to the optical waveguide region inside the optical fiber. That is, according to this production method, the above-described compressive stress can be more reliably generated in the optical fiber to be drawn by using the difference in thermal expansion coefficient between the optical waveguide region and the outer cladding. As described above, according to this production method, the transmission loss of an optical fiber can be more reliably reduced without depending on a configuration of a production apparatus. Note that, in this embodiment, the first thermal expansion coefficient may be 1.3 times or more the second thermal expansion coefficient. In this embodiment, the first thermal expansion coefficient of the material constituting the outer cladding may be larger than the second thermal expansion coefficient of the material constituting the optical waveguide region, and the first viscosity at 1500°C of the material constituting the optical waveguide region may be lower than the second viscosity at 1500°C of the material constituting the outer cladding. By combining both the embodiments in this manner, the compressive stress generated in the optical waveguide region can be further increased, and the degree of freedom in selecting the material to be added to the optical waveguide region and the outer cladding region can also be increased.

As an embodiment, in the method for producing an optical fiber according to any one of the above-described embodiments, at least one of an alkali metal element, an alkaline earth metal element, a halogen element, and phosphorus may be added to the material constituting the optical waveguide region, and at least one of germanium oxide, aluminum oxide, and boron oxide may be added to the material constituting the outer cladding. By adding at least one of an alkali metal element, an alkaline earth metal element, a halogen element, and phosphorus to the optical waveguide region, the stickiness (viscosity) of glass, which is a material of the optical waveguide region, can be easily reduced. Two or three or all of an alkali metal element, an alkaline earth metal element, a halogen element, and phosphorus may be added to the optical waveguide region. The thermal expansion coefficient of the outer cladding can be easily increased by adding at least one of germanium oxide, aluminum oxide, and boron oxide to the outer cladding. Two or three of germanium oxide, aluminum oxide, and boron oxide may be added to the outer cladding.

As an embodiment, in the method for producing an optical fiber according to any one of the above-described embodiments, in the drawing, a drawing tension for drawing the optical fiber preform may be larger than 150 gf. In this case, a compressive stress generated in the optical waveguide region can be further increased, and for example, a compressive stress of 100 MPa or more can be easily generated. Note that, the drawing tension for drawing the optical fiber preform may be 200 gf or more.

An optical fiber according to an embodiment is an optical fiber formed to include a core, a surrounding cladding surrounding a periphery of the core, and an outer cladding surrounding the surrounding cladding. In this optical fiber, a maximum compressive stress of an optical waveguide region including at least the core is 100 MPa or more.

In this optical fiber, a maximum compressive stress of an optical waveguide region including at least the core is 100 MPa or more. When an optical fiber preform is drawn to form an optical fiber, strain caused by a difference in thermal expansion coefficient or a difference in viscosity in the radial direction of a material such as glass composition remains in the drawn optical fiber. In this optical fiber, this strain is controlled, and a large compressive stress is generated in the optical waveguide region. In this case, a void component that causes scattering in a material (for example, glass) of the optical waveguide region through which light propagates is compressed by the compressive stress generated in the optical waveguide region, and the glass density of the optical waveguide region of the optical fiber can be improved. As a result, in this optical fiber, transmission loss due to scattering can be reduced.

As an embodiment, in the above-described optical fiber, the optical waveguide region may be a region of twice or less a core diameter. The optical waveguide region may be a region of three times or less the core diameter. As a result, a region of 99% or more with respect to the entire single-mode transmission optical power can propagate through a low-loss glass portion, which contributes to reduction of the transmission loss.

As an embodiment, in the optical fiber according to any one of the above-described embodiments, at least one of an alkali metal element, an alkaline earth metal element, a halogen element, and phosphorus may be added to the material constituting the optical waveguide region. By the addition of such an alkali metal or the like, the stickiness of glass, which is a material of the optical waveguide region, can be easily reduced, and the above-described compressive stress in the optical fiber can be more reliably generated by using the viscosity difference between the optical waveguide region and the outer cladding. In the above-described optical fiber, at least one of germanium oxide, aluminum oxide, and boron oxide may be added to the material constituting the outer cladding. By the addition of this germanium oxide or the like, the thermal expansion coefficient of the outer cladding can be easily increased, and the above-described compressive stress in the optical fiber can be more reliably generated by using the difference in thermal expansion coefficient between the optical waveguide region and the outer
cladding. As described above, according to this optical fiber, the transmission loss can be more reliably reduced.

As an embodiment, in the optical fiber according to any one of the above-described embodiments, a tensile stress may be applied to a part of the outer cladding. In this case, it is possible to load the residual strain caused by increasing the drawing tension on a part of the cladding, and it is possible to expect the effect of reducing the transmission loss caused by lowering a drawing temperature.

### [Details of Embodiments of Present Disclosure]

Specific examples of the method for producing an optical fiber according to an embodiment of the present disclosure will be described below with reference to the drawings. It should be noted that the present invention is not limited to these examples, is described by the claims, and is intended to include meanings equivalent to the claims and all changes within the scope of the claims. In the following description, the same reference signs will be used for the same elements or elements having the same functions, and the redundant description is omitted.

### (Production Apparatus of Optical Fiber)

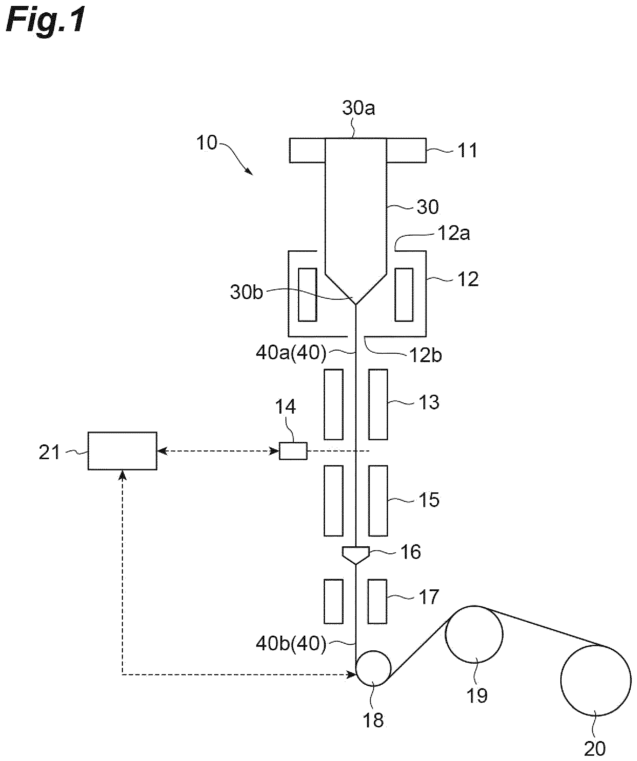

FIG.1 is a configuration diagram of a drawing apparatus used in a method for producing an optical fiber according to an embodiment. A drawing apparatus 10 illustrated in FIG. 1 is an apparatus for producing an optical fiber 40 from an optical fiber preform 30 through glass fibers. The drawing apparatus 10 includes a gripping portion 11, a heating furnace 12, a measuring instrument 14, a cooler 15, a die 16, an ultraviolet irradiator 17, a direct guide roller 18, a capstan 19, a winding machine 20, and a control device 21. Note that, a holding furnace 13 may be provided between the heating furnace 12 and the measuring instrument 14.

The gripping portion 11 is a member for gripping the optical fiber preform 30 and sending the optical fiber preform 30 into the heating furnace 12 at a constant speed. The optical fiber preform 30 has a proximal end portion 30a gripped by the gripping portion 11 and a distal end portion 30b inserted into the heating furnace 12. The gripping portion 11 functions as a supply portion that supplies the optical fiber preform 30 to the heating furnace 12.

The heating furnace 12 has an opening 12a into which the optical fiber preform 30 is inserted and an opening 12b facing the opening 12a and drawn out as a glass fiber-like optical fiber 40a. The heating furnace 12 heats and melts (softens) the distal end portion 30b of the optical fiber preform 30 supplied into the heating furnace 12. The glass fiber-like optical fiber 40a is drawn out from the distal end portion 30b melted by heating. The glass fiber-like optical fiber 40a is drawn out of the heating furnace 12 through the opening 12b.

The holding furnace 13 retains heat of the glass fiber-like optical fiber 40a and relaxes the structure of glass. The measuring instrument 14 measures the outer diameter (glass outer diameter) of the optical fiber 40a in a state where the structure of glass is relaxed. For example, the measuring instrument 14 irradiates the optical fiber 40a with laser to measure the glass outer diameter. A time interval of sampling of the glass outer diameter by the measuring instrument 14 is, for example, 100 ms or less. Although depending on the drawing speed, when the sampling interval becomes long, there is a possibility that the variation in the short period of the glass outer diameter cannot be detected. The measuring instrument 14 transmits the measured glass outer diameter to the control device 21.

The cooler 15 is disposed at a subsequent stage of the measuring instrument 14 and cools the glass fiber-like optical fiber 40a. The die 16 applies a resin to the outer peripheral surface of the incoming optical fiber 40a to form a coating resin. The resin includes an acrylate-based ultraviolet curable resin. The ultraviolet irradiator 17 irradiates the coating resin formed on the optical fiber 40a with ultraviolet light to cure the coating resin. As a result, the glass fiber is coated with the resin to form an optical fiber 40b. The optical fiber 40b is sent to the capstan 19 by the direct guide roller 18.

The capstan 19 pulls the optical fiber 40b at a predetermined speed and tension. The winding machine 20 winds up the optical fiber 40b pulled by the capstan 19. The control device 21 receives the glass outer diameter measured by the measuring instrument 14 from the measuring instrument 14, controls the winding machine 20 and the like based on the glass outer diameter. The control device 21 may control the entire drawing apparatus 10.

For example, the control device 21 may be configured as a computer system including a processor such as a CPU (Central Processing Unit), a memory such as a RAM (Random Access Memory) and a ROM (Read Only Memory), an input/output device such as a touch panel, a mouse, a keyboard, and a display, and a communication device such as a network card. The control device 21 realizes a function of the control device 21 by operating each hardware under control of a processor based on a computer program stored in a memory.

### (Configuration of Optical Fiber Preform and Optical Fiber)

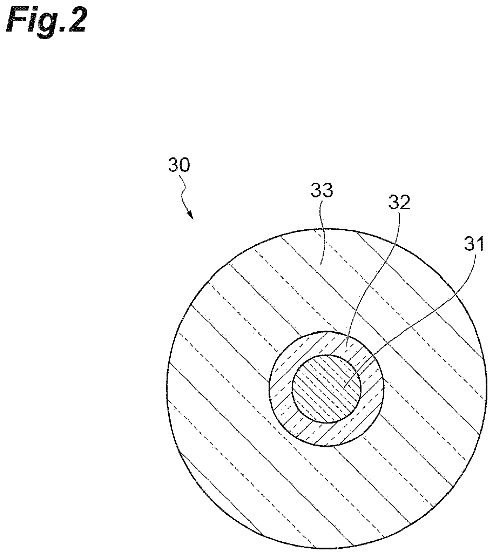

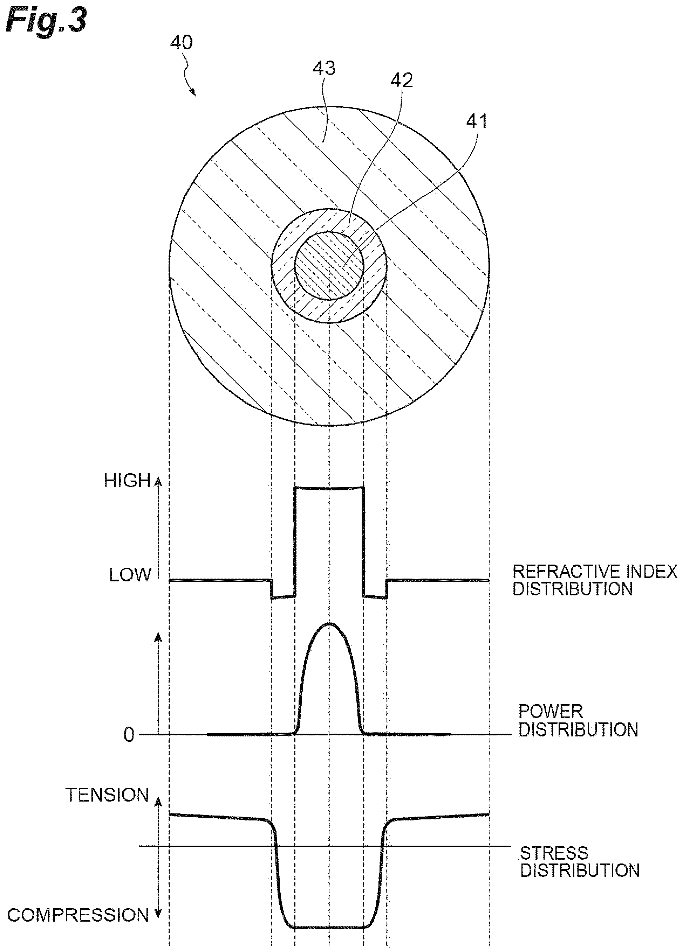

FIG.2 is a cross-sectional view illustrating a cross-sectional configuration of an optical fiber preform. FIG.3 is a cross-sectional view illustrating a cross-sectional configuration of an optical fiber formed of an optical fiber preform, and also shows refractive index distribution, power distribution, and stress distribution in the optical fiber. As illustrated in FIG.2, the optical fiber preform 30 includes a core 31, a surrounding cladding 32, and an outer cladding 33. As illustrated in FIG.3, the optical fiber 40 includes a core 41, a surrounding cladding 42, and an outer cladding 43. When the optical fiber preform 30 is drawn to form the optical fiber 40, the core 31 of the optical fiber preform 30 becomes the core 41 of the optical fiber 40, the surrounding cladding 32 of the optical fiber preform 30 becomes the surrounding cladding 42 of the optical fiber 40, and the outer cladding 33 of the optical fiber preform 30 becomes the outer cladding 43 of the optical fiber 40. Note that, the core 41 and the surrounding cladding 42 of the optical fiber 40 are an optical waveguide region that is a region for transmitting light in the optical fiber 40. In such an optical fiber 40, as illustrated in FIG.3, the refractive index of the core 41 is configured to be higher than those of the surrounding cladding 32 and the outer cladding 33, and the power of light propagating through the core 41 is stronger than the power of light propagating through the surrounding cladding 32 and the outer cladding 33. On the other hand, in the present embodiment, by providing a difference in thermal expansion coefficient and a difference in viscosity in the material configuration in the radial direction of the optical fiber preform 30, as illustrated in FIG.3, a compressive stress is generated in the core 41 and the surrounding cladding 42 when the optical fiber 40 is formed. A tensile stress is generated in a part of the outer cladding 43. Details thereof will be described below.

The core 31 of the optical fiber preform 30 is formed of, for example, silica-based glass (SiO₂). At least one of an alkali metal element, an alkaline earth metal element, a halogen element, and phosphorus may be added to the core 31 formed of such a glass material. For example, by adding an alkali metal element, an alkaline earth metal element, a halogen element, or phosphorus to the core 31, the stickiness of glass constituting the core 31 can be reduced. Examples of the alkali metal element added to the core 31 include potassium (K), sodium (Na), lithium (Li), rubidium (Rb), and cesium (Cs). Examples of the alkaline earth metal element added to the core 31 include magnesium (Mg), calcium (Ca), strontium (Sr), and barium (Ba). Examples of another element added to the core 31 include phosphorus (P). The metal element added to the core 31 is preferably a metal oxide, and an alkali metal oxide added to the core 31 can be selected from the group consisting of K₂O, Na₂O, Li₂O, Rb₂O, and Cs₂O, and an alkaline earth metal oxide can be selected from the group consisting of MgO, CaO, SrO, and BaO, and a phosphorus oxide can be selected from the group consisting of P₂O₅ and mixtures thereof. The concentration of the alkali metal, alkaline earth metal, or phosphorus element added to the core 31 may be 50 atomic ppm or more and 10000 atomic ppm or less, and is more preferably 100 atomic ppm or more and 1000 atomic ppm or less, with respect to silica-based glass.

Examples of the halogen element added to the core 31 include fluorine (F) and chlorine (Cl). The concentration of the halogen element added to the core 31 may be 0.01 atom% or more and 5 atom% or less, and is more preferably 0.025 atom% or more and 1 atom% or less, with respect to silica-based glass. As an example, the core 31 can be formed by adding K₂O, F, and Cl to silica-based glass.

The surrounding cladding 32 is a portion that covers the core 31 and constitutes an optical waveguide region together with the core 31, and is formed of, for example, silica-based glass (SiO₂). Similarly to the core 31, at least one of an alkali metal element, an alkaline earth metal element, a halogen element, and phosphorus may be added to the surrounding cladding 32. The material to be added can be the same as the material of the core 31 described above, and is appropriately selected. As an example, the surrounding cladding 32 can be formed by adding K₂O and F to silica-based glass.

The outer cladding 33 is a portion that surrounds the surrounding cladding 32 and covers the core 31 and the surrounding cladding 32, and is formed of, for example, silica-based glass (SiO₂). The outer cladding 33 is configured such that the refractive index of the outer cladding 43 is lower than the refractive index of the core 41 (see FIG.3). For example, a halogen element such as fluorine is added to the outer cladding 33. Germanium oxide (GeO₂), aluminum oxide (Al₂O₃), and/or boron oxide (B₂O₃) are added to the outer cladding 33 in order to make the thermal expansion coefficient larger than, for example, those of the core 31 and the surrounding cladding 32. The concentration of GeO₂ or the like added to the outer cladding 33 may be 1 atom% or more and 20 atom% or less, and is more preferably 1 atom% or more and 10 atom% or less, with respect to silica-based glass. As an example, the outer cladding 33 can be formed by adding GeO₂ and F to silica-based glass.

As described above, in the optical fiber preform 30, at least one element of, for example, an alkali metal, an alkaline earth metal, a halogen element, and phosphorus is added to the core 31 and the surrounding cladding 32, and the viscosities of the core 31 and the surrounding cladding 32 are lower than the viscosity of the outer cladding 33. That is, the optical fiber preform 30 is formed in advance such that the viscosities of the core 41 and the surrounding cladding 42 when the optical fiber 40 is formed (first viscosity which is an average value of the viscosities of the regions constituting the optical waveguide region) is lower than the viscosity of the outer cladding 43 (second viscosity). Note that, the viscosity of the optical fiber 40 here is, for example, a viscosity at 1500°C. The difference and ratio between the viscosity of the core 41 and the like and the viscosity of the outer cladding 43 are not particularly limited, but for example, the viscosity of the optical waveguide region of the core 41 and the like may be lower than one-fifth (1/5) of the viscosity of the outer cladding 43, and may be one-tenth (1/10) or less. By significantly reducing the stickiness of the optical waveguide region in this manner, it is possible to generate a larger compressive strain in the optical waveguide region of the optical fiber 40 when the optical fiber preform 30 is drawn and vitrified.

In the optical fiber preform 30, GeO₂, Al₂O₃, or the like that increases the thermal expansion coefficient is added to the outer cladding 33, and the thermal expansion coefficient of the material constituting the outer cladding 33 is configured to be larger than the thermal expansion coefficients of the materials constituting the core 31 and the surrounding cladding 32. That is, the optical fiber preform 30 is formed in advance such that the thermal expansion coefficient of the material of the outer cladding 43 when the optical fiber 40 is formed (first thermal expansion coefficient) is larger than the thermal expansion coefficients of the materials of the core 41 and the surrounding cladding 42 (second thermal expansion coefficient which is an average value of the thermal expansion coefficients of the regions constituting the optical waveguide region). The difference and ratio between the thermal expansion coefficient of the material of the outer cladding 43 and the thermal expansion coefficient of the material of the core 41 and the like are not particularly limited, but for example, the thermal expansion coefficient of the material of the outer cladding 43 may be 1.3 times or more the thermal expansion coefficient of the material of the core 41 or the surrounding cladding 42 which is the optical waveguide region, and may be 1.5 times or more. By increasing the thermal expansion coefficient of the outer cladding in this manner, it is possible to generate a larger compressive strain in the optical waveguide region of the optical fiber 40 when the optical fiber preform 30 is drawn and vitrified.

Note that, the optical fiber preform 30 having the above-described configuration can be produced by, for example, a Vapor Phase Axial Deposition (VAD) method. The optical fiber preform 30 may be produced by other methods, for example, an Modified Chemical Vapor Deposition (MCVD) method or an Outside Vapor Deposition (OVD) method.

### (Method for Producing Optical Fiber)

Next, a method for producing the optical fiber 40 by drawing from the optical fiber preform 30 having the above-described configuration using the above-described drawing apparatus 10 will be described.

First, the optical fiber preform 30 is gripped by the gripping portion 11 of the drawing apparatus 10. The distal end portion 30b of the optical fiber preform 30 is inserted into the heating furnace 12 (drawing furnace) to heat the distal end portion 30b of the optical fiber preform 30. Thereafter, when the distal end portion 30b of the optical fiber preform 30 is sufficiently heated and melted, the glass fiber-like optical fiber 40a is pulled out from the distal end portion 30b. A drawing tension of drawing by the drawing apparatus 10 is not particularly limited, but may be, for example, a drawing tension larger than 150 gf, and the optical fiber preform 30 is drawn with a drawing tension of 200 gf or more.

In this drawing, in the optical fiber 40, for example, K₂O, F, and Cl are added to silica-based glass in the core 41 corresponding to the core 31. By the addition of K₂O, F, and Cl, the stickiness of the core 41 is significantly lowered than that of the outer cladding 43. In the surrounding cladding 42 corresponding to the surrounding cladding 32, similarly to the cores 31 and 41, for example, K₂O and F are added to silica-based glass. By the addition of K₂O and F, the stickiness of the surrounding cladding 32 is significantly lowered than that of the outer cladding 33. Note that, the stickiness of the surrounding cladding 32 may be smaller than the stickiness of the core 31.

On the other hand, in the outer cladding 43 corresponding to the outer cladding 33, for example, GeO₂ and F are added to silica-based glass. By the addition of Ge₂O or the like, the thermal expansion coefficient of the outer cladding 43 is higher than the thermal expansion coefficient of the core 41. Note that, the thermal expansion coefficient of the core 41 and the thermal expansion coefficient of the surrounding cladding 42 are substantially the same.

Subsequently, the drawn glass fiber-like optical fiber 40a is kept warm in the holding furnace 13. As a result, the structure of the glass is relaxed. Note that, this heat retaining step may not be included. When the glass structure of the optical fiber 40a is relaxed by heat retention, the outer diameter of the optical fiber 40a is measured by the measuring instrument 14, and the optical fiber 40a is cooled by the cooler 15. Thereafter, a coating layer is formed on the optical fiber 40a by the die 16, and the coating layer is ultraviolet-cured by the ultraviolet irradiator 17 to form the optical fiber 40b. After that, the optical fiber 40b on which the coating layer is formed is wound by the winding machine 20 via the direct guide roller 18 and the capstan 19. As a result, the optical fiber 40 is produced.

As illustrated in FIG.3, the optical fiber 40 produced in this manner includes the core 41, the surrounding cladding 42 surrounding the periphery of the core 41, and the outer cladding 43 surrounding the surrounding cladding 42. In this optical fiber 40, since the optical fiber preform 30 to which the above-described various materials are added is formed by drawing, the maximum compressive stress of the optical waveguide region including the core 41 and the surrounding cladding 42 is 100 MPa or more.

More specifically, since the core 41 corresponds to the core 31, the core 41 is formed of, for example, silica-based glass (SiO₂), and similarly to the core 31, at least one of an alkali metal element, an alkaline earth metal element, a halogen element, and phosphorus is added. Since the surrounding cladding 42 corresponds to the surrounding cladding 32, the surrounding cladding 42 is formed of, for example, silica-based glass (SiO₂), and similarly to the surrounding cladding 32, at least one of an alkali metal element, an alkaline earth metal element, a halogen element, and phosphorus is added. By adding at least one of an alkali metal element, an alkaline earth metal element, a halogen element, and phosphorus to the core 31 and the surrounding cladding 32, in the optical fiber 40, the stickiness of glass constituting the core 41 and the surrounding cladding 42 is reduced.

On the other hand, the outer cladding 43 is formed of, for example, silica-based glass (SiO₂), and similarly to the outer cladding 33, the refractive index of the outer cladding 43 is configured to be lower than the refractive index of the core 41. For example, a halogen element such as fluorine is added to the outer cladding 43. Germanium oxide (GeO₂), aluminum oxide (Al₂O₃), and/or boron oxide (B₂O₃) are added to the outer cladding 43 in order to make the thermal expansion coefficient larger than, for example, those of the core 41 and the surrounding cladding 42. By the addition of this germanium oxide or the like, in the optical fiber 40, the thermal expansion coefficient of the outer cladding 43 is increased. As described above, in the optical fiber 40, the above-described compressive stress in the optical fiber 40 is more reliably generated by using the viscosity difference between the optical waveguide region and the outer cladding 43 and the difference in thermal expansion coefficient between the optical waveguide region and the outer cladding 43.

As described above, in the method for producing an optical fiber according to the present embodiment, the stickiness of the core 41 and the surrounding cladding 42 is significantly lowered with respect to the stickiness of the outer cladding 43 which is a non-waveguide region. Due to this difference in stickiness, a tensile force applied to the optical fiber 40 is concentrated on the outer cladding 43 having high stickiness when the optical fiber preform 30 is heated, melted, and drawn, and this state is released after drawing, so that the compressive strain remains in the core 41 and the surrounding cladding 42 that do not hold tensile force as much as the tensile strain on the outer side is released. That is, according to this production method, the compressive stress can be more reliably generated in the core 41 and the surrounding cladding 42 in the optical fiber 40 to be produced by using the difference in viscosity between the optical waveguide region and the outer cladding. In this method for producing an optical fiber, the thermal expansion coefficient of the outer cladding 43 is larger than the thermal expansion coefficients of the core 41 and the surrounding cladding 42. Therefore, when the optical fiber preform 30 is heated and melted and then vitrified (that is, which the optical fiber 40a or 40b is formed), the outer cladding 43 contracts in a direction of further reducing the volume, and thus the compressive stress is generated in the optical waveguide region (the core 41 and the surrounding cladding 42) inside the optical fiber 40. That is, according to this production method, the compressive stress is further generated in the core 41 and the like in the drawn optical fiber 40 by using the difference in thermal expansion coefficient between the optical waveguide region and the outer cladding 43, and the value of this compressive stress is 100 MPa or more. In the optical fiber 40, at least one of an alkali metal element, an alkaline earth metal element, a halogen element, and phosphorus is added to the optical waveguide region, and at least one of germanium oxide, aluminum oxide, and boron oxide is added to the outer cladding 43.

As described above, in the method for producing an optical fiber according to the present embodiment, the compressive stress is generated in the core 41 and the like inside the optical fiber 40 by using the difference in thermal expansion coefficient and the difference in viscosity in the radial direction of the optical fiber. According to such a production method, a compressive stress of 100 MPa or more can be easily generated in the core 41 and the like of the optical fiber 40. That is, when the optical fiber preform 30 is drawn to form the optical fiber 40, strain caused by a difference in thermal expansion coefficient or a difference in viscosity distributed in the radial direction of the material (glass composition) remains in the drawn optical fiber 40. In the production method according to this embodiment, a large compressive stress is generated in the core 41 and the surrounding cladding 42, which are the optical waveguide regions, by controlling this strain. By generating such a compressive stress in the optical waveguide region, a void component that causes scattering in a material (for example, glass) of the optical waveguide region through which light propagates is compressed by the compressive stress generated in the optical waveguide region, and the glass density of the optical fiber 40 is improved. That is, it is possible to reduce the density in the glass of the optical fiber 40 and reduce the Rayleigh scattering loss. As a result, transmission loss due to scattering in the optical fiber can be reduced.

In this method for producing an optical fiber, as described above, the above-described compressive stress is generated to reduce the transmission loss of the optical fiber by devising the configuration in the radial direction of the optical fiber preform 30 used for drawing or the optical fiber 40 to be drawn. Therefore, since it is not necessary to provide a pressurized vessel or the like on the drawing apparatus side of the optical fiber 40, the optical fiber 40 having a low transmission loss can be produced without depending on the configuration of the apparatus for producing an optical fiber.

As described above, according to the production method of the present embodiment, the transmission loss of the optical fiber 40 can be reduced without depending on the configuration of the production apparatus.

In the method for producing an optical fiber according to the present embodiment, the drawing tension for drawing the optical fiber preform 30 may be larger than 150 gf. In this case, a compressive stress generated in the optical waveguide region can be further increased, and for example, a compressive stress of 100 MPa or more can be easily generated.

Although the embodiments according to the present disclosure have been described in detail above, the present invention is not limited to the above embodiments, and can be applied to various embodiments. For example, in the above embodiment, the compressive stress of 100 MPa or more is generated in the optical waveguide region of the core 41 or the like of the optical fiber 40 to reduce the transmission loss by using both the difference in stickiness and the difference in thermal expansion coefficient in the radial direction of the optical fiber preform 30 and the optical fiber 40, but the present invention is not limited thereto. For example, the compressive stress of 100 MPa or more may be generated in the optical waveguide region of the core 41 or the like of the optical fiber 40 by using the difference in stickiness in the radial direction of the optical fiber preform 30 and the optical fiber 40, and the compressive stress of 100 MPa or more may be generated in the optical waveguide region of the core 41 or the like of the optical fiber 40 by using the difference in thermal expansion coefficient in the radial direction of the optical fiber preform 30 and the optical fiber 40. The compressive stress of 100 MPa or more may be generated in the optical waveguide region of the core 41 or the like of the optical fiber 40 by adjusting the drawing tension to these differences (for example, applying a larger drawing tension).

In the above embodiment, a case where a conventional apparatus is used as the apparatus for drawing the optical fiber preform 30 has been exemplified, but the present invention is not limited thereto. For example, a mechanism (pressure vessel) for pressurizing the optical fiber may be provided in the apparatus for drawing the optical fiber preform 30, and the optical fiber preform 30 having the above-described composition in the radial direction may be drawn to reduce the transmission loss of the optical fiber 40. By combining both the mechanism and the composition, the transmission loss of the optical fiber 40 can be further reduced.

### [Experimental Examples]

Hereinafter, the contents of the present disclosure will be described more specifically based on experimental examples, but the present invention is not limited to the following experimental examples.

First, the optical fiber preform 30 having a glass configuration shown in Table 1 was prepared. In this optical fiber preform 30, the core 31 was made of silica-based glass, and K₂O, F, and Cl were added. The respective addition concentrations were 100 atomic ppm, 0.2 atom%, and 0.01 atom% with respect to SiO₂ (standard). The surrounding cladding 32 was made of silica-based glass, and K₂O and F were added. The respective addition concentrations were 80 atomic ppm and 1.5 atom% with respect to SiO₂ (standard). The outer cladding 33 was made of silica-based glass, and GeO₂ and F were added. The respective addition concentrations were 2.5 atom% and 0.7 atom% with respect to SiO₂ (standard). Note that, in Table 1, the viscosities and the thermal expansion coefficients of the core 31, the surrounding cladding 32, and the outer cladding 33 are shown as ratios when the value of the core 31 is taken as "1". The viscosity is, for example, a viscosity at 1500°C. When the optical fiber preform 30 is drawn to form the optical fiber 40, the outer cladding 33 is set such that the outer cladding 43 is separated from the outer periphery of the core 41 of the optical fiber 40 by 20 µm or more in the radial direction. The diameter of the core 41 of the drawn optical fiber 40 was 10 µm, the diameter of the surrounding cladding 42 was 50 µm, and the diameter of the outer cladding 43 was 125 µm.

**[Table 1]**

| | Core | Surrounding cladding | Outer cladding |
|---|---|---|---|
| Material | SiO₂/K₂O/F, Cl | SiO₂/K₂O/F | SiO₂/GeO₂/F |
| Viscosity ratio | 1 | 0.90 | 10 |
| Thermal expansion ratio | 1 | 0.99 | 1.5 |

The above-described optical fiber preform 30 was drawn with four types of drawing tensions of 50 gf, 150 gf, 250 gf, and 500 gf by using the drawing apparatus 10 to produce the optical fiber 40. As shown in Table 2 below, the optical fiber 40 produced by drawing with each drawing tension corresponds to each of Experimental Examples 1 to 4. The compressive stress generated in the core 41 and the surrounding cladding 42 of each produced optical fiber 40 and the transmission loss when light having a wavelength of 1.55 µm was transmitted were as shown in Table 2. Note that, the stress was measured by a method applying a photoelastic effect (a phenomenon in which the refractive index changes according to the direction of the stress remaining in the medium).

**[Table 2]**

| | Drawing tension [gf] | Compressive stress [MPa] of optical waveguide region | Transmission loss [dB/km] at wavelength of 1.55 µm |
|---|---|---|---|
| Experimental Example 1 | 50 | 30 | 0.152 |
| Experimental Example 2 | 150 | 90 | 0.148 |
| Experimental Example 3 | 250 | 160 | 0.142 |
| Experimental Example 4 | 500 | 350 | 0.138 |

As shown in Table 2, in Experimental Examples 1 to 4, it could be confirmed that a sufficient compressive stress is generated in the core 41 and the surrounding cladding 42 by adding K₂O, F, and Cl to the core 31 and the surrounding cladding 32 and adding GeO₂ to the outer cladding 33. In Experimental Examples 3 and 4, by setting the drawing tension to 250 gf and 500 gf, which are higher than usual, the compressive stress generated in the core 41 could be set to 160 MPa and 350 MPa, which are 100 MPa or more. By setting the compressive stress generated in the core 41 of the optical fiber 40 to 100 MPa or more as described above, it has been confirmed that the transmission loss of the optical fiber can be reduced to less than 0.148 dB/km, which may be one reference, as shown in Experimental Examples 3 and 4.

Other experimental examples in which an oxide of potassium (K) as an alkali metal is not added to the core 31 and the surrounding cladding 32 will be described. In these experimental examples, since no alkali metal was added, the stickiness of the core 31 and the surrounding cladding 32 was higher than the stickiness of the outer cladding 33. In these experimental examples, germanium (Ge) for increasing the thermal expansion coefficient was not added to the outer cladding 33. More specifically, in this other experimental example, the optical fiber preform 30 having a glass configuration shown in Table 3 was prepared. In this optical fiber preform 30, the core 31 was made of silica-based glass, and only Cl was added. The addition concentration of Cl was 0.7 atom% with respect to SiO₂ (standard). The surrounding cladding 32 was made of silica-based glass, and only F was added. The addition concentration of F was 1.5 atom% with respect to SiO₂ (standard). The outer cladding 33 was made of silica-based glass, and only F was added. The addition concentration of F was 1.2 atom% with respect to SiO₂ (standard). Note that, in Table 3, the viscosities and the thermal expansion coefficients of the core 31, the surrounding cladding 32, and the outer cladding 33 are shown as ratios when the value of the core 31 is taken as "1". The viscosity is, for example, a viscosity at 1500°C. When the optical fiber preform 30 is drawn to form the optical fiber 40, the outer cladding 33 is set such that the outer cladding 43 is separated from the outer periphery of the core 41 of the optical fiber 40 by 20 µm or more in the radial direction. The diameter and the like of the core 41 of the drawn optical fiber 40 were similar to those in the above-described experimental example.

**[Table 3]**

| | Core | Surrounding cladding | Outer cladding |
|---|---|---|---|
| Material | SiO₂/Cl | SiO₂/F | SiO₂/F |
| Viscosity ratio | 1 | 0.6 | 0.7 |
| Thermal expansion ratio | 1 | 0.99 | 0.99 |

The above-described optical fiber preform 30 was drawn with four types of drawing tensions of 10 gf, 50 gf, 100 gf, and 250 gf by using the drawing apparatus 10 to produce the optical fiber 40. As shown in Table 4 below, the optical fiber 40 produced by drawing with each drawing tension corresponds to each of Experimental Examples 5 to 8. The compressive stress generated in the core 41 of each produced optical fiber 40 and the transmission loss when light having a wavelength of 1.55 µm was transmitted were as shown in Table 4 below.

**[Table 4]**

| | Drawing tension [gf] | Compressive stress [MPa] of optical waveguide region | Transmission loss [dB/km] at wavelength of 1.55 µm |
|---|---|---|---|
| Experimental Example 5 | 10 | -10 | 0.168 |
| Experimental Example 6 | 50 | -90 | 0.176 |
| Experimental Example 7 | 10 | -180 | 0.189 |
| Experimental Example 8 | 250 | -400 | 0.23 |

As shown in Table 4, in Experimental Examples 5 to 8, since the thermal expansion coefficient of the outer cladding 33 was not increased and the stickiness of the core 31 and the surrounding cladding 32 was not significantly lowered, the compressive stress generated in the core 41 was not increased even when the drawing tension was increased, and the tensile stress was conversely increased. It has been confirmed that the stress generated in the core 41 of the optical fiber 40 becomes the tensile stress, thereby deteriorating the transmission loss of the optical fiber as shown in Experimental Examples 5 to 8.

### Reference Signs List

- 10: drawing apparatus
- 11: gripping portion
- 12: heating furnace
- 12a, 12b: opening
- 13: holding furnace
- 14: measuring instrument
- 15: cooler
- 16: die
- 17: ultraviolet irradiator
- 18: direct guide roller
- 19: capstan
- 20: winding machine
- 21: control device
- 30: optical fiber preform
- 30a: proximal end portion
- 30b: distal end portion
- 31: core
- 32: surrounding cladding
- 33: outer cladding
- 40: optical fiber
- 41: core
- 42: surrounding cladding
- 43: outer cladding

## Claims

1. A method for producing an optical fiber (40), comprising
heating and melting an optical fiber preform (30) and drawing the optical fiber preform (30),
wherein the optical fiber (40) is formed to include a core (41), a surrounding cladding (42) surrounding a periphery of the core (41), and an outer cladding (43) surrounding the surrounding cladding (42), and
**characterized in that**
in the drawn optical fiber (40), a maximum compressive stress of at least 100 MPa or more is applied to an optical waveguide region (41, 42) including the core (41) and the surrounding cladding (42),
and a first viscosity being a viscosity at 1500°C of a material constituting the optical waveguide region (41, 42) is lower than a second viscosity being a viscosity at 1500°C of a material constituting the outer cladding (43).

2. The method for producing an optical fiber (40) according to claim 1,
wherein at least one of an alkali metal element, an alkaline earth metal element, a halogen element, and phosphorus is added to the material constituting the optical waveguide region (41, 42), and
wherein at least one of germanium oxide, aluminum oxide, and boron oxide is added to the material constituting the outer cladding (43).

3. The method for producing an optical fiber (40) according to claim 1 or 2, wherein, in the drawing, a drawing tension for drawing the optical fiber preform (30) is larger than 1.47 N (150 gf).

4. The method for producing an optical fiber (40) according to any one of claims 1 to 3,
wherein a tensile stress is applied to a part of the outer cladding (43).

5. An optical fiber (40) formed to include a core (41), a surrounding cladding (42) surrounding a periphery of the core (41), and an outer cladding (43) surrounding the surrounding cladding (42),
**characterized in that**
a maximum compressive stress of an optical waveguide region (41, 42) including the core (41) and the surrounding cladding (42) is 100 MPa or more, and
a first viscosity being a viscosity at 1500°C of a material constituting the optical waveguide region (41, 42) is lower than a second viscosity being a viscosity at 1500°C of a material constituting the outer cladding (43).

6. The optical fiber (40) according to claim 5,
wherein the optical waveguide region (41, 42) is a region of twice or less a core diameter.

7. The optical fiber (40) according to claim 5,
wherein the optical waveguide region (41, 42) is a region of three times or less a core diameter.

8. The optical fiber (40) according to any one of claims 5 to 7,
wherein at least one of an alkali metal element, an alkaline earth metal element, a halogen element, and phosphorus is added to the material constituting the optical waveguide region (41, 42), and
wherein at least one of germanium oxide, aluminum oxide, and boron oxide is added to the material constituting the outer cladding (43).

## Patentansprüche

1. Verfahren zur Herstellung einer optischen Faser (40), umfassend
Erhitzen und Schmelzen einer optischen Faservorform (30) und Ziehen der optischen Faservorform (30),
wobei die optische Faser (40) ausgebildet wird, um einen Kern, (41), einen umgebenden Mantel (42), der einen Umfang des Kerns (41) umgibt, und einen äußeren Mantel (43), der den umgebenden Mantel (42) umgibt, aufzuweisen, und
**dadurch gekennzeichnet, dass**
in der gezogenen optischen Faser (40) eine maximale Druckverspannung von mindestens 100 MPa oder mehr auf einen optischen Wellenleiterbereich (41, 42), der den Kern (41) und den umgebenden Mantel (42) aufweist, ausgeübt wird,
und eine erste Viskosität, die eine Viskosität bei 1500 °C eines den optischen Wellenleiterbereich (41, 42) bildenden Materials ist, niedriger ist als eine zweite Viskosität, die eine Viskosität bei 1500 °C eines den äußeren Mantel (43) bildenden Materials ist.

2. Verfahren zur Herstellung einer optischen Faser (40) gemäß Anspruch 1,
wobei mindestens eines aus einem Alkalimetallelement, einem Erdalkalimetallelement, einem Halogenelement und Phosphor zu dem den optische Wellenleiterbereich (41, 42) bildenden Material hinzugefügt wird, und
wobei mindestens eines aus Germaniumoxid, Aluminiumoxid und Boroxid zu dem den äußeren Mantel (41, 42) bildenden Material hinzugefügt wird.

3. Verfahren zur Herstellung einer optischen Faser (40) gemäß Anspruch 1 oder 2,
wobei bei dem Ziehen eine Ziehspannung zum Ziehen der optischen Faservorform (30) größer als 1,47 N (150 gf) ist.

4. Verfahren zur Herstellung einer optischen Faser (40) gemäß einem der Ansprüche 1 bis 3,
wobei eine Zugverspannung auf einen Teil des äußeren Mantels (43) ausgeübt wird.

5. Optische Faser (40), die ausgebildet wird, um einen Kern (41), einen umgebenden Mantel (42), der einen Umfang des Kerns (41) umgibt, und einen äußeren Mantel (43), der den umgebenden Mantel (43) umgibt, aufzuweisen
**dadurch gekennzeichnet, dass**
eine maximale Druckverspannung eines optischen Wellenleiterbereichs (41, 42), der den Kern (41) und den umgebenden Mantel (42) aufweist, 100 MPa oder mehr ist, und
eine erste Viskosität, die eine Viskosität bei 1500 °C eines den optischen Wellenleiterbereich (41, 42) bildenden Materials ist, niedriger ist als eine zweite Viskosität, die eine Viskosität bei 1500 °C eines den äußeren Mantel (43) bildenden Materials ist.

6. Optische Faser (40) nach Anspruch 5,
wobei der optische Wellenleiterbereich (41, 42) ein Bereich mit einem doppelten Kerndurchmesser oder weniger ist.

7. Optische Faser (40) nach Anspruch 5,
wobei der optische Wellenleiterbereich (41, 42) ein Bereich mit einem dreifachen Kerndurchmesser oder weniger ist.

8. Optische Faser (40) gemäß einem der Ansprüche 5 bis 7,
wobei mindestens eines aus einem Alkalimetallelement, einem Erdalkalimetallelement, einem Halogenelement und Phosphor zu dem den optische Wellenleiterbereich (41, 42) bildenden Material hinzugefügt wird, und
wobei mindestens eines aus Germaniumoxid, Aluminiumoxid und Boroxid zu dem den äußeren Mantel (41, 42) bildenden Material hinzugefügt wird.

## Revendications

1. Procédé pour fabriquer une fibre optique (40), comprenant
chauffer et fondre une préforme de fibre optique (30) et étirer la préforme de fibre optique (30),
dans lequel la fibre optique (40) est formée pour comporter un cœur (41), une gaine entourante (42) qui entourne une périphérie du cœur (41) et une gaine extérieure (43) entourant la gaine entourante (42), et
**caractérisé en ce que**
dans la fibre optique étirée (40), une contrainte de compression maximale d'au moins 100 MPa ou plus est appliquée à une région de guide d'ondes optique (41, 42) comportant le cœur (41) et la gaine entourante (42),
et une première viscosité étant une viscosité à 1500 °C d'un matériau constituant la région de guide d'ondes optique (41, 42) est inférieure à une seconde viscosité étant une viscosité à 1500 °C d'un matériau constituant la gaine extérieure (43).

2. Procédé pour fabriquer une fibre optique (40) selon la revendication 1,
dans lequel au moins un parmi un élément de métal alcalin, un élément de métal alcalino-terreux, un élément d'halogène et le phosphore est ajouté au matériau constituant la région de guide d'ondes optique (41, 42), et
dans lequel au moins un parmi l'oxyde de germanium, l'oxyde d'aluminium et l'oxyde de bore, est ajouté au matériau constituant la gaine extérieure (43).

3. Procédé pour fabriquer une fibre optique (40) selon la revendication 1 ou 2,
dans lequel, lors de l'étirage, une tension d'étirage pour étirer la préforme de fibre optique (30) est plus grande que 1,47 N (150 gf).

4. Procédé pour fabriquer une fibre optique (40) selon l'une quelconque des revendications 1 à 3,
dans lequel une contrainte de traction est appliquée à une partie de la gaine extérieure (43).

5. Fibre optique (40) formée pour comporter un cœur (41), une gaine entourante (42) entourant une périphérie du cœur (41) et une gaine extérieure (43) entourant la gaine entourante (42),
**caractérisée en ce que**
une contrainte de compression maximale d'une région de guide d'ondes optique (41, 42) comportant le cœur (41) et la gaine entourante (42) est de 100 Mpa ou plus, et
une première viscosité étant une viscosité à 1500 °C d'un matériau constituant la région de guide d'ondes optique (41, 42) est inférieure à une seconde viscosité étant une viscosité à 1500 °C d'un matériau constituant la gaine extérieure (43).

6. Fibre optique (40) selon la revendication 5,
dans lequel la région de guide d'ondes optique (41, 42) est une région de deux fois un diamètre de cœur ou moins.

7. Fibre optique (40) selon la revendication 5,
dans lequel la région de guide d'ondes optique (41, 42) est une région de trois fois un diamètre de cœur ou moins.

8. Fibre optique (40) selon l'une quelconque des revendications 5 à 7,
dans lequel au moins un parmi un élément de métal alcalin, un élément de métal alcalino-terreux, un élément d'halogène et le phosphore est ajouté au matériau constituant la région de guide d'ondes optique (41, 42), et
dans lequel au moins un parmi l'oxyde de germanium, l'oxyde d'aluminium et l'oxyde de bore est ajouté au matériau constituant la gaine extérieure (43).
